# EUROPEAN PATENT SPECIFICATION

(11) **EP 3 317 574 B1**
(45) Date of publication and mention of the grant of the patent: **15.04.2020**
(21) Application number: 16751643.4
(22) Date of filing: 30.06.2016
(51) Int. Cl.: F16L 37/12, F16L 37/138, F16L 37/18

(54) **QUICK COUPLING**
SCHNELLKOPPLUNG
ACCOUPLEMENT RAPIDE

(30) Priority: 01.07.2015 IT UB20151857
(43) Date of publication of application: 09.05.2018
(73) Proprietor: Polo S.R.L., 23841 Annone di Brianza (LC) (IT)
(72) Inventor: POZZI, Marco, 23900 Lecco (IT); LOCATELLI, Silvia, 23900 Lecco (IT)
(74) Representative: Brasca, Marco
(86) International application number: PCT/IB2016/053916
(87) International publication number: WO 2017/002053

(56) References cited:
- DE-A1- 3 639 528
- US-A- 3 962 769
- US-A1- 2013 174 928
- US-B1- 6 530 605

## Description

### Technical field

The object of the present invention is a quick coupling. In particular, the present invention relates to a device for quick connection of a conduit of a circuit crossed by a fluid to a smooth male terminal. The invention relates to the field of quick couplings able to quickly and securely realise the connecting and disconnecting operations of two different conduits crossed by fluids, while obviating the onerous operations of manual locking that require the use of keys or other tools and ensuring the mechanical seal and the hermetic seal. The use of these quick couplings becomes necessary, for example but not exclusively, when functional tests are carried out on products requiring connection to pneumatic/oil-hydraulic/hydraulic circuits (for example: boilers, radiators, engines, pumps, hydraulic/pneumatic cylinders, valves etc.). In particular, the device of the present invention may be used in many varied fields, in which pressure and flow rate of use can vary from negative values (presence of vacuum) to very high values.

### State of the Art

Quick couplings are known that are manually activatable in a push-pull mode, in which the connection step is done by gripping an external ring nut of the coupling and pushing the coupling against the terminal it is to be coupled with until the coupling is hooked and mechanically retained, and the disconnecting step is done once more by acting on the external ring nut.

For example, the prior art document EP 1876381 describes a quick coupling for threaded terminals. An end of this coupling destined to receive the terminal is provided with an annular connection body made up of a plurality of annular segments elastically joined to one another by means of an elastic ring and having, internally or externally according to the type of terminal to be connected, a threading or profiling configured for carrying out the connection to the terminal. Prior-art document WO 2013/175351 illustrates a quick coupling for threaded or profiled terminals which comprises: a central body extending between an upper end sealingly connectable to a terminal and a lower end connectable to a circuit; a hooking clamp associated to the central body and operable at least between a first configuration, in which it is not hooked to the terminal and enables insertion and de-insertion of the central body into and from the terminal, and a second configuration, in which it is hooked to the terminal and connects the central body thereto; activating means movably active on the central body and on the hooking clamp for enabling passage of the hooking clamp between the first and the second configuration and, consequently, the coupling and decoupling of the central body to and from the terminal.

Prior art document US 6 530 605 discloses a quick connector for pipes for pressure or vacuum testing which includes a tubular housing extending in an axial direction, a spreadable connecting element mounted within the tubular housing, formed as a sleeve and configured to clamp a pipe in a connected position and an actuating device configured to act upon the connecting element to release the connecting element. The actuating device includes a hand lever extending in the axial direction of the housing. The hand lever has an actuating push rod that extends through an outer wall of the housing. The quick connector includes further a piston positioned within the housing and configured to be movable in the axial direction by the actuating device and a compression spring positioned within the housing and configured to bias the piston in a connected position.

Prior art document DE 3 639 528 discloses a plug-in coupling for externally threaded connections, having a piston which can move by pressure medium in a cylindrical housing and is provided, on the connection side, with radially expandable clamping jaws which are held in positively locking engagement in the clamping position, sealing taking place at an end surface of the externally threaded connection or at an inner edge thereof. A sealing piece is provided which can move to a restricted extent with respect to the piston and in the clamped-in position is pressed firmly against the threaded connection.

Prior art document US 3 962 769 discloses a hydraulic chuck having a piston means with an axially centered passage and a first end sized to engage a tube. Collet means are located at the first end of the piston for engagement with said tube upon closure of the collet means. Surface means bearing on the collet means are provided to close the collet on the tube. Biasing means are provided to normally force the surface means against the collet means to incur a closed position of the collet. A handle is provided for movement of the biasing means to remove the surface means from the collet means whereby the tube may be inserted into the chuck.

Prior art document US 2013/174928 discloses a quick connect fluid connectors that include an eccentric mounted roller mechanism disposed within a slot in a main body and that is in continuous engagement with front and back walls of the slot. The eccentric mounted roller mechanism is used to actuate connection collets when the eccentric mounted roller mechanism is rotated.

The Applicant has observed that known quick couplings, such as the ones described in the foregoing, can be improved in various ways, with reference to the mechanical elements of the couplings configured for managing the coupling and decoupling of the terminal and in particular with reference to the activating systems of said mechanical elements.

The Applicant has in fact, for example, noted that the annular sectors known from document EP 187638, as they are moved by means of a simple elastic ring, do not guarantee a precise coupling with the terminal and can be subject to a deterioration in performance over time.

The Applicant has further observed that the hooking clamp of the type illustrated in WO 2013/175351 must necessarily have sufficiently long arms in order to provide the necessary radial opening/closing of the ends thereof and that this not only does not guarantee a secure and precise coupling, neither does it have the capacity to reduce the longitudinal dimensions of the coupling.

### Objective of the invention

In this context, the Applicant has set the objective of proposing a quick coupling that is qualitatively superior and possibly more economical and also more compact than those of the prior art.

The Applicant has set itself the objective of providing a quick coupling having a modest size.

The Applicant has also set itself the objective of realising a quick coupling that is simpler in structure than quick couplings of the prior art and at the same time is able to guarantee high performance and great reliability in use.

The Applicant has further set itself the objective of realising a quick coupling provided with high flexibility of use able to guarantee the seal with different working pressures.

### Summary of the invention

The Applicant has found that these objectives and aims can be attained by a quick coupling according to the present invention, as claimed in the appended claims.

The Applicant has verified that managing the position of the jaw by means of a lever is particularly advantageous. The lever enables manual management of the locking of the terminal to the quick coupling and is easily activatable. Further, the lever enables locking the quick coupling on the terminal by application of a modest force.

According to the invention, the axial position of the fulcrum of the lever on the tubular body is adjustable.

The axial displacement of the fulcrum is particularly advantageous, as it enables modulating the locking force to apply on the lever for determining the passage of the jaw from the first to the second position. By modulating the locking force to be applied to the lever, the force with which the jaw closes about the terminal is further modulated. The lever further enables regulating the sealing force on the basis of the pressure of the fluid destined to cross the quick coupling.

In an aspect, the tubular body comprises a regulator to which said lever is engaged, the fulcrum of the lever being axially displaceable by movement of the regulator.

In an aspect, the regulator is configured so as to be moved axially with respect to the main body.

In an aspect, the lever is solidly constrained to the regulator.

In an aspect, the tubular body comprises a first and a second portion, the fulcrum being engaged to the first portion and the first portion defining the regulator.

In an aspect, the regulator is engaged to the second portion of the tubular body by means of a threaded coupling.

In an aspect, the regulator is configured so as to be moved axially with respect to the second portion of the tubular body and with respect to the main body.

In an aspect, the quick coupling comprises a blocking element configured for blocking the movement of the regulator.

In an aspect, the blocking element is configured for being moved axially with respect to the tubular body.

In an aspect, the blocking element is engaged to the tubular body by means of a threaded coupling.

In an aspect, the lever is mobile with respect to the regulator between at least a first unhooked condition, corresponding to the first unhooked position of the jaw, and a second locked condition, corresponding to the second hooked position of the jaw.

In an aspect, the jaw is engaged to the tubular body at a tapered surface of the tubular body, the activation of the lever determining the axial sliding of the jaw along said tapered surface, the radial compression of the jaw and the consequent passage of the jaw from the first unhooked position to the second hooked position. In an aspect, the jaw is configured for sliding axially along the tapered surface or, vice versa, the tapered surface is configured for sliding axially with respect to the jaw.

In an aspect, the quick coupling comprises at least a main seal axially arranged between the main body and the jaw, the lever being configured so as to determine the compression of said at least a main seal against an external surface of the terminal.

In an aspect, the quick coupling comprises a plurality of main seals arranged axially between the main body and the jaw.

In an aspect, said at least a main seal is borne by an annular element.

In an aspect, the lever is provided with an operating portion configured for acting on the main body for determining the passage of the jaw from the first unhooked position to the second hooked position, and vice versa.

In an aspect, said operating portion has an arched surface developing continuously with respect to an abutment surface of the lever.

In an aspect, in the second hooked position the abutment surface of the lever is in abutment on the main body.

In an aspect, upon the passage of the lever from a first unhooked condition, corresponding to the first unhooked position of the jaw, to a second locked condition, corresponding to the second hooked position of the jaw, the arched surface exerts a thrust on the main body that is greater than a thrust exerted by the abutment surface.

In an aspect, the jaw comprises a plurality of circular sectors.

In an aspect, by circular sector is meant an element having an extension that is at least partly an arc of circumference.

In an aspect, the jaw comprises an elastic ring arranged internally of said circular sectors, the elastic ring being configured so as to maintain the circular sectors in the first position of the jaw.

In an aspect, the quick coupling comprises a bushing configured for defining an abutment for the terminal, the bushing being engaged to the main body and being configured so as to enter into abutment with the terminal at least in the second hooked position of the jaw.

In an aspect, the quick coupling comprises an elastic element operating between the bushing and the main body, the elastic element being configured for pushing the bushing away from the main body, in particular towards the terminal.

In an aspect, the quick coupling comprises a plate, said plate being engaged to the tubular body and being configured for providing an abutment for said jaw.

In an aspect, the quick coupling comprises an auxiliary elastic element operating between said plate and the tubular body, said auxiliary elastic element being configured for pushing the plate towards said jaw.

According to an aspect, the present invention relates to a regulating method of a quick coupling according to one or more of the preceding aspects and/or the appended claims, the method comprising:
- axially displacing the fulcrum of the lever with respect to a first portion of the tubular body;
- axially blocking the fulcrum of the lever with respect to the first portion of the tubular body.

In an aspect, axially displacing the fulcrum of the lever with respect to the first portion of the tubular body comprises axially displacing the regulator with respect to the first portion of the tubular body.

In an aspect, axially blocking the fulcrum of the lever with respect to the first portion of the tubular body comprises regulating the position of the blocking element with respect to the regulator.

According to an aspect, the present invention relates to a blocking method of a quick coupling according to one or more of the preceding aspects and/or the accompanying claims, the method comprising:
- engaging a terminal internally of the tubular body;
- activating the lever about the fulcrum, the activation of the lever about the fulcrum determining the blocking of the jaw about the terminal.

In an aspect, the activation of the lever determines the axial sliding of the jaw along the tapered surface of the tubular body and consequently the radial compression of the jaw about the terminal.

In an aspect, the activation of the lever about the fulcrum comprises moving the lever in rotation about the fulcrum.

According to an aspect, the present invention relates to a method for realising a quick coupling according to one or more of the preceding aspects and/or the accompanying claims, comprising:
- predisposing a main body and a tubular body;
- engaging the tubular body to the main body;
- engaging a lever to the tubular body - main body assembly, said lever being configured for operating on the main body and being activatable about a fulcrum, the lever being engaged to the tubular body - main body assembly so that said fulcrum is axially displaceable.

In an aspect, engaging the tubular body to the main body comprises engaging a regulator to the main body, said regulator being configured for being axially moved with respect to the main body and for axially displacing said fulcrum.

In an aspect, engaging the tubular body to the main body comprises engaging a second portion of the tubular body to the main body and engaging a first portion of the tubular body to the second portion of the tubular body, the first portion defining a regulator configured for being axially moved with respect to the main body and for axially displacing said fulcrum.

In an aspect, the lever is engaged to the regulator.

### Brief description of the drawings

There now follows, by way of non-limiting example, a detailed description of one or more preferred embodiments of the invention, in which:
- figure 1 is a view of a quick coupling according to the present invention in a first configuration;
- figure 2 is a section view of the quick coupling of figure 1;
- figure 2a is a front view of some elements of the quick coupling of figure 2;
- figure 3 is a view of a quick coupling according to the present invention in an intermediate configuration between the first configuration and the second configuration;
- figure 3a is a view of a lever of a quick coupling according to the present invention;
- figure 4 is a section view of the quick coupling of figure 3;
- figure 4a is a front view of some elements of the quick coupling of figure 4;
- figure 5 is a view of a quick coupling according to the present invention in the second configuration;
- figure 6 is a section view of the quick coupling of figure 5;
- figure 6a is a front view of some elements of the quick coupling of figure 5.

### Detailed description

With reference to the figures, 1 indicates overall a quick coupling. The accompanying figures illustrate a quick coupling 1 configured for being engaged to smooth terminals. The quick coupling 1 comprises a main body 2 and a tubular body 3. The main body 2 is configured for engaging to a hydraulic circuit, while the tubular body 3 is configured for engaging to a terminal 4. As will be described in greater detail in the following, the tubular body 3 is engaged to the main body 2. The main body 2 substantially defines a first end 5 of the quick coupling 1 at which a portion of the circuit is engaged and the tubular body 3 substantially defines a second end 6 of the quick coupling 1 at which the terminal 4 is engaged. The first end 5 can be internally threaded and be therefore configured for being engaged to a threaded tubing of the circuit, while the second end 6 is configured for being engaged to smooth terminals 4.

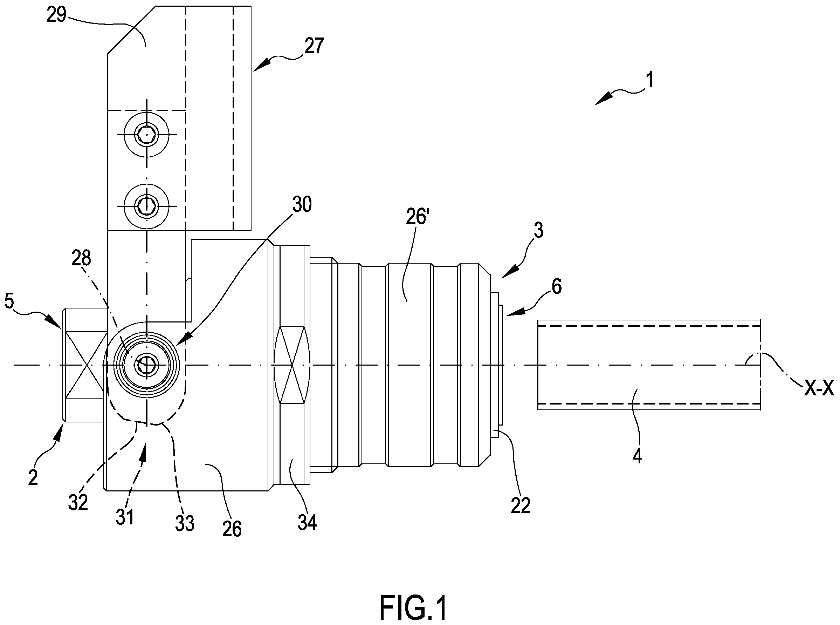

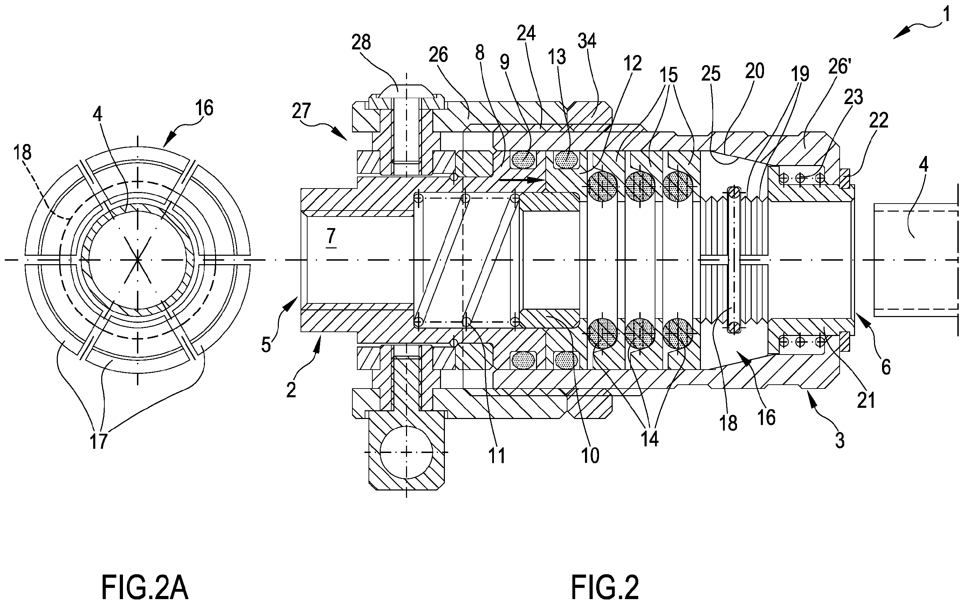

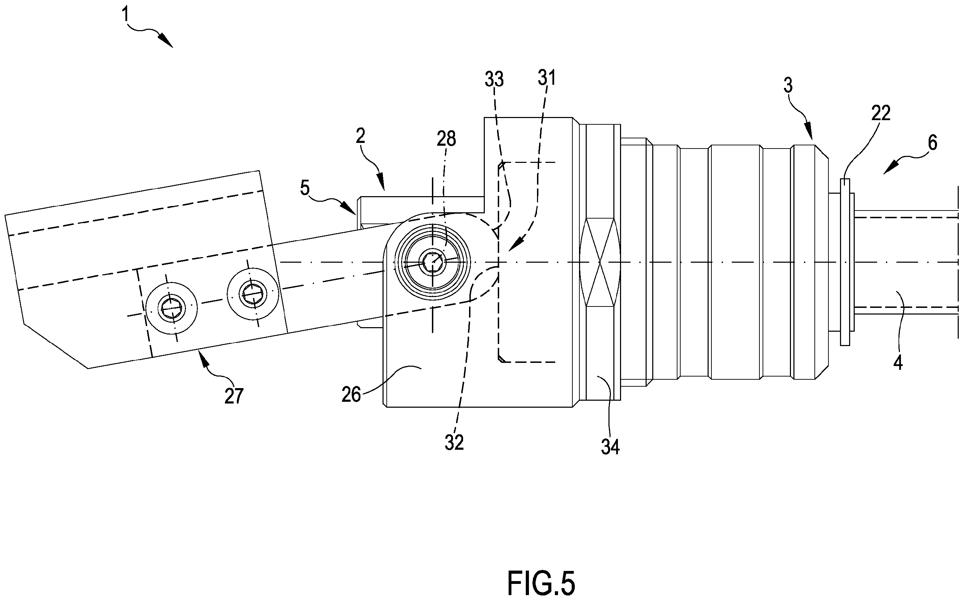

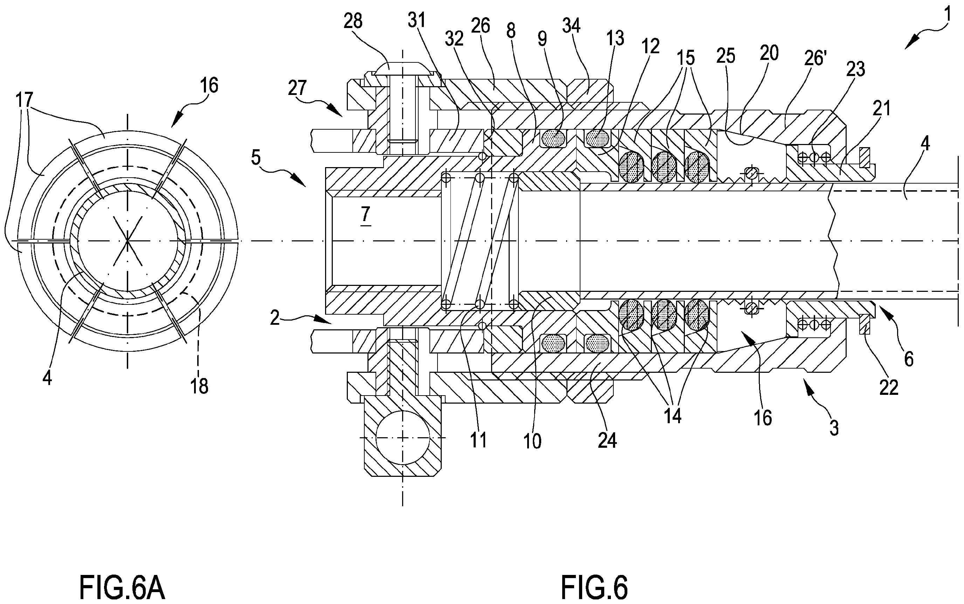

The quick coupling 1 is configured for operating between a first configuration in which it does not constrain the terminal 4 (see figures 1, 2 and 2a) and a second configuration in which it solidly constrains the terminal 4 (see figures 5, 6 and 6a). The main body 2 defines a passage conduit 7 for a fluid destined to cross the quick coupling 1. The main body 2 is further provided with a collar 8 bearing a first seal 9, in particular an o-ring. The first seal 9 is destined to constitute a seal element between the main body 2 and the tubular body 3.

The quick coupling 1 comprises a bushing 10 engaged to the main body 2 and destined to provide an abutment for the terminal 4 upon the insertion of the terminal 4 internally of the quick coupling 1. An elastic element 11, such as a spring, is engaged between the bushing 10 and the main body 2. The elastic element 11 is configured for pushing the bushing 10 in the direction of the second end 6, i.e. towards the terminal 4. In the first configuration of the quick coupling 1, the bushing 10 is in abutment on an abutment element 12. The abutment element 12 bears a second seal 13, in particular an o-ring, destined to constitute a seal element between the abutment element 12 and the tubular body 3.

The quick coupling 1 further comprises at least a main seal 14, which is destined to operate about the terminal 4. Said main seal 14 is destined to guarantee the fluid seal between the terminal 4 and the tubular body 3. An embodiment is illustrated in the accompanying figures in which the quick coupling 1 comprises three main seals 14 borne by respective annular elements 15. Each seal 14 is configured for being deformed and/or compressed upon the passage of the quick coupling 1 from the first to the second configuration.

The quick coupling 1 further comprises a jaw 16, which is internally engaged to the tubular body 3. The jaw 16 is radially compressible, elastically deformable and configured for operating between a first unhooked position from the terminal 4 (see figures 1, 2 and 2a) and a second hooked position to the terminal 4 (see figures 6 and 6a). In the first unhooked position from the terminal 4, the jaw 16 does not constrain the terminal 4 to the quick coupling 1, while in the second hooked position the jaw 16 solidly constrains the terminal 4 to the quick coupling 1. The passage of the jaw 16 between the first unhooked position and the second hooked position is carried out by elastic deformation of the jaw 16. In terms of operation, the first unhooked position of the jaw 16 corresponds to the first configuration of the quick coupling 1 and the second hooked position of the jaw 16 corresponds to the second configuration of the quick coupling 1.

The jaw 16 comprises a plurality of circular sectors 17 (see figures 2a, 4a, 6a) and an elastic ring 18 engaged to the circular sectors 17. As illustrated in the accompanying figures, the elastic ring 18 is in contact with the circular sectors 17 at an internal surface of the circular sectors 17. The circular sectors 17 extend for an arc of circumference, are arranged about the elastic ring 18 and comprise a seat destined to house a respective portion of the elastic ring 18. The elastic ring 18 is configured for maintaining the jaw 16 in the first position and for pushing the circular sectors 17 against an internal surface of the tubular body 3 (see for example figures 2, 4 and 6). The elastic ring 18 thus opposes the compression of the jaw 16. The elastic ring 18 is preferably made of steel, in particular stainless steel.

According to the embodiment illustrated in the accompanying figures, the circular sectors 17 are internally knurled and are configured for being stably engaged to smooth terminals. The knurling is preferably of the parallel-line type. As illustrated in figure 2, the knurled circular sectors 17 comprise a plurality of serrations 19 destined to grip on the smooth terminal 4, so as to increase the stability of the engagement between the jaw 16 and the terminal 4.

The jaw 16 is internally engaged to the tubular body 3 and has an external surface 20 that is at least partly truncoconical. In particular, each circular sector 17 defines a portion of said truncoconical external surface 20. Said external surface 20 of the jaw 16 is configured for axially sliding along a tapered surface 25 of the tubular body 3.

As illustrated in the accompanying figures, the jaw 16 is in abutment on an annular element 15 and, on the axially opposite side, on a plate 21, which in turn is engaged to the tubular body 3. A limit-stop element 22 destined to prevent disengagement by de-insertion of the tubular body 3 from the quick coupling 1 is engaged to the plate 21. An auxiliary elastic element 23, such as a spring, is arranged between the tubular body 3 and the plate 21. Said auxiliary elastic element 23 is configured for pushing said plate 21 against the jaw 16. Both the elastic elements 11, 23 of the quick coupling 1 are configured for compacting together the bushing 10, the plate 21, the abutment element 12, the annular elements 15 bearing the main seals 14 and the jaw 16.

As previously mentioned, the quick coupling 1 further comprises a tubular body 3 engaged to the main body 2. In particular, the tubular body 3 is engaged to the main body 2 externally thereof. The abutment element 12, the annular elements 15 bearing the main seals 14 and the jaw 16 are housed internally of the tubular body 3. The tubular body 3 comprises a first and a second portion 26, 26'. The second portion 26' substantially defines the second end 6 of the quick coupling 1. As illustrated in the accompanying figures, the second portion 26' of the tubular body 3 has a collar 24 destined to be engaged externally of the collar 8 of the main body 2.

The second portion 26' of the tubular body 3 comprises the tapered surface 25 along which the jaw 16 is configured to axially slide. The axial sliding of the jaw 16 along the tapered surface 25 enables the passage of the jaw 16 from the first to the second position. Alternatively the passage of the jaw 16 from the first to the second position can be determined by the axial sliding of the tapered surface 25 with respect to the jaw 16. The relative axial sliding between the jaw 16 and the tapered surface 25 determines the radial compression and the locking of the jaw 16 about the terminal 4 and consequently enables a solid engagement of the terminal 4 to the quick coupling 1. In this regard, see figure 6 which illustrates the engaged configuration of the terminal 4 to the quick coupling 1 (second configuration of the quick coupling 1). In the second configuration of the quick coupling 1, each annular element 15 of the jaw 16 is in abutment on a portion of external surface of the terminal 4.

The second portion 26' of the tubular body 3 further has an externally threaded portion defined at the collar 24. The externally threaded portion enables the engagement of a regulator 26 of the quick coupling 1 to the tubular body 3. The regulator 26 is defined by the first portion of the tubular body 3 and will be described in greater detail in the following.

The quick coupling 1 further comprises a lever 27. The lever 27 represents the element of the quick coupling 1 configured for determining the passage of the quick coupling 1 from the first to the second configuration. The lever 27 is therefore configured for enabling the passage of the jaw 16 from the first unhooked position to the second hooked position and vice versa. In geometric terms, the lever 27 extends along a preferential extension direction L-L.

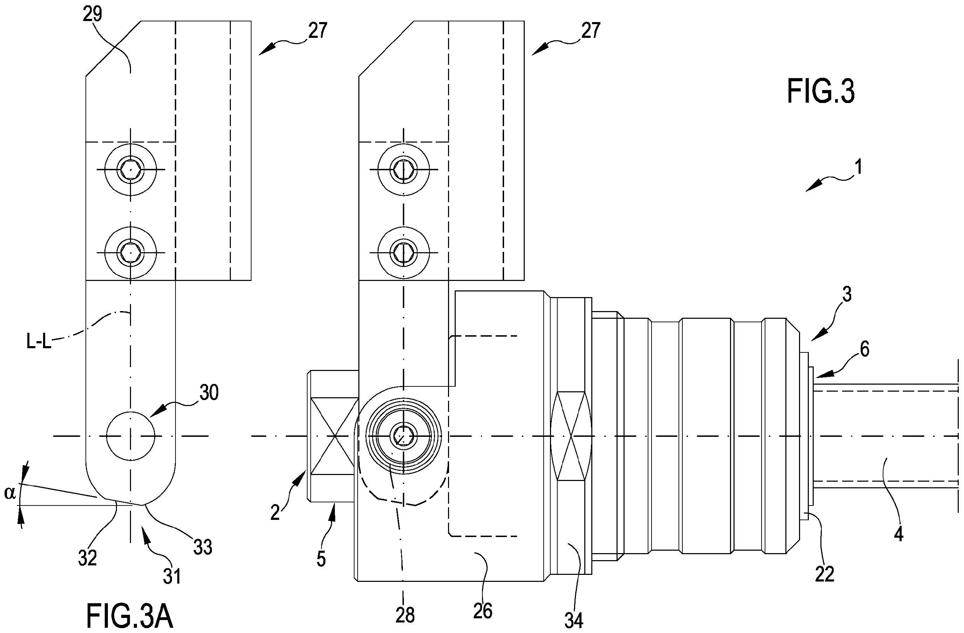

The lever 27 is engaged to the regulator 26 and is activatable about a fulcrum 28. In greater detail, the lever 27 is movable by rotation about the fulcrum 28 so as to determine the passage of the quick coupling 1 between said configurations. As illustrated in the accompanying figures, the fulcrum 28 is engaged to the regulator 26 of the tubular body 3. Figure 1 illustrates the position that the lever 27 assumes in the first configuration of the quick coupling 1 (the unhooked condition of the lever 27: terminal 4 unhooked) and figure 5 illustrates the position that the lever 27 assumes in the second configuration of the quick coupling 1 (locked condition of the lever 27: hooked terminal 4). The lever 27 comprises an activating portion 29 and an engaging portion 30 bearing the fulcrum 28. As illustrated in figure 3a, the activating portion 29 and the engaging portion 30 are opposite with reference to the extension direction L-L of the lever 27.

The activating portion 29 enables manual activation of the lever 27 and in particular the movement between the operating positions described in the foregoing. The engaging portion 30 enables the engagement of the lever 27 to the regulator 26.

The lever 27 further has an operating portion 31 defined in proximity of the engaging portion 30. The operating portion 31 has an abutment surface 32 that is transversal with respect to the flanks of the lever 27. As illustrated in figure 3a, said abutment surface 32 is not perpendicular with respect to the flanks of the lever 27. In particular, the abutment surface 32 is substantially flat. An arched surface 33 of the lever 27 extends in continuity with respect to the abutment surface 32. As illustrated in figures 5 and 6, in the second configuration of the quick coupling 1, the abutment surface 32 is in abutment on the main body 2 to define a stable coupling zone of the lever 27. Upon the passage of the quick coupling 1 from the first to the second configuration, the arched surface 33 of the lever 27 is configured so as to exert a thrust on the main body 2 so as to push the main body 2 towards the jaw 16. The arched surface 33 substantially defines a zone of maximum compression of the lever 27. As illustrated in figure 3a, the abutment surface 32 extends along a direction forming an angle α with a straight line tangential to the arched surface 33 (the tangential straight line is perpendicular to the preferential extension direction L-L of the lever 27). The angle α can have a value comprised between 2° and 15°, in particular comprised between 4° and 10°, still more in particular substantially 5°.

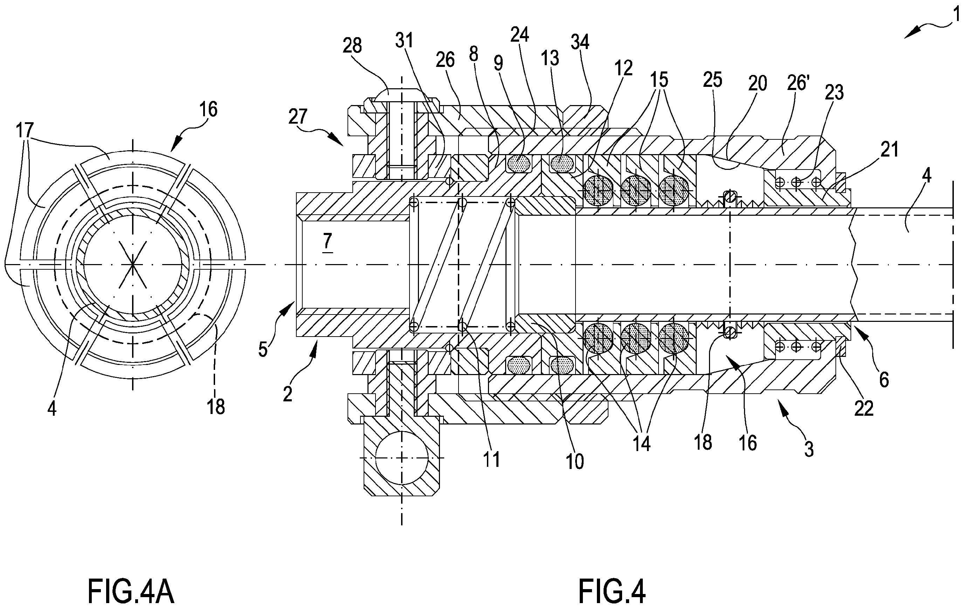

With the aim of being able to pass from the first to the second configuration of the quick coupling 1, the lever 27 is activated in rotation about the fulcrum 28. The activation of the lever 27 brings the operating portion 31 of the lever 27 to exert a thrust on the main body 2. The thrust of the operating portion 31 of the lever 27 on the main body 2 determines an axial sliding of the main body 2, the abutment element 12, the annular elements 15 bearing the respective main seals 14 and the jaw 16. The jaw 16 is therefore forced to slide axially along the tapered surface 25 of the tubular body 3. As it slides along the tapered surface 25, the jaw 16 is subjected to a radial compression which causes locking thereof about the terminal 4. The configuration in which the jaw 16 is locked about the terminal 4 so as to constrain it is for example illustrated in figures 6 and 6a. The thrust of the operating portion 31 of the lever 27 against the main body 2 further determines an axial crushing and radial compression of the main seals 14 borne by the annular elements 15, which are arranged between the main body 2 and the jaw 16. By means of this deformation, the main seals 14 are brought in abutment on an external surface of the terminal 4. The deformed configuration of the main seals 14 is for example illustrated in figure 6. The use of at least a main seal 14 is particularly advantageous as, in the second configuration of the quick coupling 1, it determines the seal and contributes to guaranteeing the stable positioning of the terminal 4 internally of the tubular body 3. From a comparison between figure 4 and figure 6 the sliding of the main body 2 and the abutment element 12 can also be noted, which in figure 4, is in abutment on the bushing 10 while in figure 6 it is distanced from the bushing 10.

Upon the passage of the quick coupling 1 from the first to the second configuration (locking of the lever 27), the force to be applied on the lever 27 is not constant. In particular, in a first locking step of the lever 27 it is necessary to apply on the lever 27 a force which increases linearly so as to bring the lever 27 up to the condition in which the arched surface 33 is in abutment on the main body 2. In this condition, the quick coupling 1 (in particular the main seals 14) is in a condition of maximum axial compression. The force to be applied on the lever 27 increases as, due to the conformation of the operating portion 31 of the lever 27, during the movement of the lever 27 the distance acting between the fulcrum 28 and the main body 2 increases (a distance defined by the thickness of the operating portion 31 of the lever 27 between the fulcrum 28 and the main body 2). In a second locking step of the lever 27, continuing in the rotation movement of the lever 27 up to the position assumed by the lever 27 in the second configuration of the quick coupling 1 (the locked condition of the lever 27, in which the abutment surface 32 of the lever 27 is in abutment on the main body 2, see figure 6), the force to be exerted on the lever 27 is lower than the force exerted in the first locking step in order to bring the arched surface 33 into abutment on the main body 2. In other terms, when the position of the lever 27 in which it is in contact with the arched surface 33 of the main body 2 has been passed beyond (i.e. the zone of maximum compression), the force to be exerted on the lever 27 for locking the quick coupling 1 is lower. The reduction of the force to be exerted is due to the fact that the distance between the fulcrum 28 and the abutment surface 32 is smaller than the distance between the arched surface 33 and the fulcrum 28. In the second locking step, the quick coupling 1 (the main seals 14) slightly expands axially because of the action of the elastic element 11 on the main body 2. The expansion does not compromise the seal provided by the main seals 14 about the terminal 4.

Vice versa, for the same reasons as stated above, upon the movement of the lever 27 for passing from the second configuration to the first configuration of the quick coupling 1, the force to be exerted in a first movement step of the lever 27 is greater than the force to be exerted in a second movement step of the lever 27. The first movement step of the lever 27 determines the passage of the lever 27 from the position that it assumes in the second configuration of the quick coupling 1 up to the position in which the arched surface 33 is in abutment on the main body 2. During the first movement step of the lever 27, the axial compression of the quick coupling 1 occurs (in particular of the main seals 14). The second movement step of the lever 27, on the other hand, determines the passage of the lever 27 from the position in which its arched surface 33 is in abutment on the main body 2 to the position it assumes in the first configuration of the quick coupling 1 (see figure 1). Conversely, in the second movement step of the lever 27, the axial expansion of the quick coupling 1 occurs (in particular of the main seals 14) due to the action of the elastic element 11 which exerts a thrust on the main body 2.

As previously mentioned, the quick coupling 1 comprises a regulator 26 (defined by the first portion of the tubular body), which is engaged to the second portion 26' of the tubular body 3 externally of the main body 2. The coupling between the regulator 26 and the second portion 26' of the tubular body 3 can be of the threaded type. The regulator 26 is configured so as to be moved axially with respect to the main body 2 and the second portion 26' of the tubular body 3. In particular, in the embodiment in which the coupling between the regulator 26 and the second portion 26' of the tubular body 3 is of the threaded type, the relative axial position between the regulator 26 and the main body 2 can be regulated by screwing or unscrewing the regulator 26 with respect to the second portion 26'. Alternatively, any other type of coupling can be included between the regulator 26 and the second portion 26' of the tubular body 3 configured for enabling the relative axial movement between the regulator 26 and the second portion 26' of the tubular body 3 and consequently between the regulator 26 and the main body 2. The regulation of the relative axial position between the regulator 26 and the main body 2 determines the axial displacement of the fulcrum 28 of the lever 27. The axial displacement of the fulcrum 28 occurs as the lever 27 is engaged to the regulator 26. In particular, in the embodiment illustrated in the accompanying figures, the lever 27 is hinged to the regulator 26 at the position of the fulcrum 28. The axial displacement or sliding of the regulator 26, and consequently of the lever 27, can be inhibited by a blocking element 34. The blocking element 34 is destined to guarantee the stable positioning of the regulator 26 on the second portion 26' of the tubular body 3 and consequently of the lever 27 with respect to the main body 2. As illustrated in the accompanying figures, the blocking element 34 is a ring nut. The possibility of axially modulating the position of the regulator 26 determines the modulation of the locking force to be applied to the lever 27 for enabling passage of the quick coupling 1 from the first to the second configuration. By moving the regulator 26 and the second portion 26' of the tubular body 3 nearingly to one another, the quick coupling 1 is compacted. The compacting includes the reciprocal nearing between the main body 2, the main seals 14 and the jaw 16. In the condition in which the quick coupling 1 is compacted, the elastic elements 11, 23 (the springs) operate in a condition of greater compression (greater with respect to the preliminary condition to the relative movement between the regulator 26 and the tubular body 3) and therefore exert a greater elastic force respectively between the plate 10 and the main body 2 and between the plate 21 and the tubular body 3. Consequently the force to be applied to the lever 27 for determining the lock between the jaw 16 about the terminal 4 is greater with respect to the force to be applied to the lever 27 in a condition of a lesser compacting of the quick coupling 1. The difference between the forces to be applied to the lever 27 in different conditions of compaction of the quick coupling 1 is due to the different elastic force exerted by the elastic elements 11, 23 which it is necessary to overcome in order to determine the locking between the jaw 16 about the terminal 4.

A configuration having a lesser degree of compaction is for example assumed by the quick coupling 1 by moving the regulator 26 and the tubular body 3 away from one another. In this way, the elastic elements 11, 23 are in a configuration of lesser compression and consequently the force to be applied to the lever 27 for determining the locking of the jaw 16 about the terminal 4 is lower as the elastic force to be overcome is smaller. The modulating of the locking force (and consequently the opening force) of the lever 27 is particularly advantageous as it provides flexibility of use for the quick coupling 1 and further enables modulating the force with which the quick coupling 1 constrains the terminal 4 and the seal of the quick coupling 1 at different pressures of the fluid destined to cross the coupling.

The present invention further relates to a method for realising a quick coupling 1 of the above-described type. The method includes the arrangement of the tubular body 3 and the main body 2. The arrangement of the tubular body 3 includes the housing of the jaw 16 internally thereof and of at least a main seal 14 borne by an annular element 15. The jaw 16 is housed at or in proximity of the tapered surface 25 of the tubular body 3. As illustrated in the accompanying figures, the abutment element 12 bearing the seal 13 and the plate 21 can also be housed internally of the tubular body 3. The method further includes the engagement of the tubular body 3 externally of the main body 2. The engagement between the tubular body 3 and the main body 2 includes the coupling of the second portion 26' of the tubular body 3 to the main body 2. The coupling is carried out at the respective collars 24, 8. Thereafter the regulator 26 (the first portion of the tubular body 3) is engaged to the second portion 26' of the tubular body 3. The regulator 26 is engaged to the second portion 26' of the tubular body 3 so as to be axially moved. The engagement between the regulator 26 and the second portion 26' is preferably of the threaded type. Then the lever 27 is engaged to the regulator 26, which lever 27 is configured for operating, as described in the foregoing, on the main body 2 and on the jaw 16 in such a way as to determine the passage of the quick coupling 1 between the first and the second configuration.

## Claims

1. A quick coupling (1) for smooth terminals, comprising:
- a main body (2) defining a passage conduit (7) for a fluid destined to cross the quick coupling (1), the passage conduit (7) extending along a main axis (X-X), the main body (2) being configured for being coupled to a circuit,
- a tubular body (3) engaged to the main body (2), the tubular body (3) being configured for being removably coupled to a smooth terminal (4),
- a jaw (16) engaged to the tubular body (3), said jaw (16) being configured for operating between at least a first unhooked position from the terminal (4), in which it does not axially constrain the terminal (4), and a second hooked position to the terminal (4) in which it is locked onto, and axially constrains, the terminal (4) to the tubular body (3),
- a lever (27) activatable about a fulcrum (28) borne by the tubular body (3), wherein the lever (27) operates on the main body (2) for axially displacing the main body (2) with respect to the tubular body (3), the activation of the lever (27) further determining an axial sliding of the jaw (16) with respect to the tubular body (3) and the passage of the jaw (16) from the first unhooked position to the second hooked position;
**characterised in that** the axial position of the fulcrum (28) of the lever (27) on the tubular body (3) is adjustable.

2. The quick coupling according to claim 1, wherein the tubular body (3) comprises a regulator (26) to which said lever (27) is engaged, the fulcrum (28) of the lever (27) being axially displaceable by movement of the regulator (26).

3. The quick coupling according to the preceding claim, comprising a blocking element (34) configured for blocking the movement of the regulator (26).

4. The quick coupling according to claim 2 or 3, wherein the lever (27) is mobile with respect to the regulator (26) between at least a first unhooked condition, corresponding to the first unhooked position of the jaw (16), and a second locked condition, corresponding to the second hooked position of the jaw (16).

5. The quick coupling according to any one of the preceding claims, wherein the jaw (16) is engaged to the tubular body (3) at a tapered surface (25) of the tubular body (3), the activation of the lever (27) determining axial sliding of the jaw (16) along said tapered surface (25), the radial compression of the jaw (16) and the consequent passage of the jaw (16) from the first unhooked position to the second hooked position.

6. The quick coupling according to any one of the preceding claims, comprising at least a main seal (14) axially arranged between the main body (2) and the jaw (16), the lever (27) being configured so as to determine the compression of said at least a main seal (14) against an external surface of the terminal (4).

7. The quick coupling according to the preceding claim, comprising a plurality of main seals (15) arranged axially between the main body (2) and the jaw (16).

8. The quick coupling according to claim 6 or 7, wherein said at least a main seal (14) is borne by an annular element (15).

9. The quick coupling according to any one of the preceding claims, wherein the lever (27) is provided with an operating portion (31) configured for acting on the main body (2) for determining the passage of the jaw (16) from the first unhooked position to the second hooked position and vice versa.

10. The quick coupling according to the preceding claim, wherein said operating portion (31) has an arched surface (33) developing continuously with respect to an abutment surface (32) of the lever (27).

11. The quick coupling according to the preceding claim, wherein upon passage of the lever (27) from a first unhooked condition, corresponding to the first unhooked position of the jaw (16), to a second locked condition, corresponding to the second hooked position of the jaw (16), the arched surface (33) exerts a thrust on the main body (2) that is greater than a thrust exerted by the abutment surface (32).

12. A regulating method of a quick coupling realised according to one or more of the preceding claims, comprising:
- axially displacing the fulcrum (28) of the lever (27) with respect to a first portion (26) of the tubular body (3);
- axially blocking the fulcrum (28) of the lever (27) with respect to the first portion of the tubular body (3).

13. The method according to the preceding claim, wherein axially displacing the fulcrum (28) of the lever (27) with respect to the first portion of the tubular body (3) comprises axially displacing a regulator (26) with respect to the first portion of the tubular body (3).

14. The method according to claim 12 or 13, wherein axially blocking the fulcrum (28) of the lever (27) with respect to the first portion of the tubular body (3) comprises regulating the position of a blocking element (34) with respect to the regulator (26).

## Patentansprüche

1. Schnellkupplung (1) für glatte Anschlüsse, wobei sie aufweist:
- einen Hauptkörper (2), der eine Durchgangsleitung (7) für ein Fluid begrenzt, das zum Queren der Schnellkupplung (1) bestimmt ist, wobei sich die Durchgangsleitung (7) entlang einer Hauptachse (X-X) erstreckt, wobei der Hauptkörper (2) zur Kupplung mit einer Leitung konfiguriert ist,
- einen rohrförmigen Körper (3), der an dem Hauptkörper (2) angreift, wobei der rohrförmige Körper (3) zur lösbaren Kupplung mit einem glatten Anschluss (4) konfiguriert ist,
- einen Backen (16), der mit dem rohrförmigen Körper (3) in Eingriff steht, wobei der Backen (16) konfiguriert ist zum Betrieb zwischen zumindest einer von dem Anschluss (4) enthakten Position, in der er den Anschluss (4) nicht axial hält, und einer zweiten an den Anschluss (4) verhakten Position, in er an dem rohrförmigen Körper (3) arretiert ist und den Anschluss (4) daran axial hält,
- einen Hebel (27), der um eine vom rohrförmigen Körper (3) getragene Stütze (28) herum aktivierbar ist, wobei der Hebel (27) auf den Hauptkörper (2) wirkt, um den Hauptkörper (2) in Bezug auf den rohrförmigen Körper (3) axial zu verlagern, wobei die Aktivierung des Hebels (27) ferner ein axiales Verschieben des Backens (16) in Bezug auf den rohrförmigen Körper (3) und den Übergang des Backens (16) von der ersten enthakten Position zu der zweiten verhakten Position bestimmt;
**dadurch gekennzeichnet, dass** die axiale Position der Stütze (28) des Hebels (27) an dem rohrförmigen Körper (3) einstellbar ist.

2. Die Schnellkupplung nach Anspruch 1, wobei der rohrförmige Körper (3) einen Regulator (26) aufweist, mit dem der Hebel (27) in Eingriff steht, wobei die Stütze (28) des Hebels (27) durch eine Bewegung des Regulators (26) axial verlagerbar ist.

3. Die Schnellkupplung nach dem vorangehenden Anspruch, die ein Blockierelement (34) aufweist, das konfiguriert ist, um die Bewegung des Regulators (26) zu blockieren.

4. Die Schnellkupplung nach Anspruch 2 oder 3, wobei der Hebel (27) in Bezug auf den Regulator (26) zwischen zumindest einem ersten enthakten Zustand, der der ersten enthakten Position des Backens (16) entspricht, und einem zweiten Zustand, der der zweiten verhakten Position des Backens (16) entspricht, beweglich ist.

5. Die Schnellkupplung nach einem der vorhergehenden Ansprüche, wobei der Backen (16) mit dem rohrförmigen Körper (3) an einer verjüngten Fläche (25) des rohrförmigen Körpers (3) in Eingriff steht, wobei die Aktivierung des Hebels (27) ein axiales Verschieben des Backens (16) entlang der verjüngten Fläche (25), die radiale Kompression des Backens (16) und den anschließenden Übergang des Backens (16) von der ersten enthakten Position zu der zweiten verhakten Position bestimmt.

6. Die Schnellkupplung nach einem der vorhergehenden Ansprüche, die zumindest eine Hauptdichtung (14) aufweist, die axial zwischen dem Hauptkörper (2) und dem Backen (16) angeordnet ist, wobei der Hebel (27) konfiguriert ist, um die Kompression der zumindest einen Hauptdichtung (14) gegen eine Außenoberfläche des Anschlusses (4) zu bestimmen.

7. Die Schnellkupplung nach dem vorhergehenden Anspruch, die eine Mehrzahl von Hauptdichtungen (15) aufweist, die axial zwischen dem Hauptkörper (2) und dem Backen (16) angeordnet sind.

8. Die Schnellkupplung nach Anspruch 6 oder 7, wobei die zumindest eine Hauptdichtung (14) von einem ringförmigen Element (50) getragen wird.

9. Die Schnellkupplung nach einem der vorhergehenden Ansprüche, wobei der Hebel (27) mit einem Bedienungsabschnitt (31) versehen ist, der zum Wirken auf den Hauptkörper (2) konfiguriert ist, um den Übergang des Backens (16) von der ersten enthakten Position zu der zweiten verhakten Position und vice versa zu bestimmen.

10. Die Schnellkupplung nach dem vorhergehenden Anspruch, wobei der Bedienungsabschnitt (31) eine Bogenfläche (33) aufweist, die in Bezug auf eine Stützfläche (32) des Hebels (27) kontinuierlich abgewickelt ist.

11. Die Schnellkupplung nach dem vorhergehenden Anspruch, wobei beim Übergang des Hebels (27) von einem ersten verhakten Zustand, entsprechend der ersten verhakten Position des Backens (16), zu einem zweiten arretierten Zustand, entsprechend der zweiten verhakten Position des Backens (16), die Bogenfläche (33) einen Druck auf den Hauptkörper (2) ausübt, der größer ist als ein von der Stützfläche (32) ausgeübter Druck.

12. Regulierungsverfahren einer Schnellkupplung, die gemäß einem oder mehreren der vorhergehenden Ansprüche realisiert ist, wobei es aufweist:
- axiales Verlagern der Stütze (28) des Hebels (27) in Bezug auf einen ersten Abschnitt (26) des rohrförmigen Körpers (3);
- axiales Blockieren der Stütze (28) des Hebels (27) in Bezug auf den ersten Abschnitt des rohrförmigen Körpers (3).

13. Das Verfahren nach dem vorhergehenden Anspruch, wobei das axiale Verlagern der Stütze (28) des Hebels (27) in Bezug auf den ersten Abschnitt des rohrförmigen Körpers (3) aufweist, einen Regulator (26) in Bezug auf den ersten Abschnitt des rohrförmigen Körpers (3) axial zu verlagern.

14. Das Verfahren nach Anspruch 12 oder 13, wobei das axiale Blockieren der Stütze (28) des Hebels (27) in Bezug auf den ersten Abschnitt des rohrförmigen Körpers (3) aufweist, die Position eines Blockierelements (34) in Bezug auf den Regulator (26) zu regulieren.

## Revendications

1. Raccord rapide (1) pour embouts lisses, comprenant :
- un corps principal (2) définissant un conduit de passage (7) pour un liquide destiné à traverser le raccord rapide (1), le conduit de passage (7) s'étendant le long d'un axe principal (X-X), le corps principal (2) étant configuré pour être accouplé à un circuit,
- un corps tubulaire (3) engagé au corps principal (2), le corps tubulaire (3) étant configuré pour être accouplé de manière amovible à un embout (4) lisse,
- une mâchoire (16) engagée au niveau du corps tubulaire (3), ladite mâchoire (16) étant configurée pour fonctionner entre au moins une première position déverrouillée depuis l'embout (4), dans laquelle elle ne contraint pas axialement l'embout (4), et une seconde position verrouillée à l'embout (4) dans laquelle elle est verrouillée dessus, et contraint axialement, l'embout (4) au corps tubulaire (3),
- un levier (27) pouvant être activé autour d'un point d'appui (28) provenant du corps tubulaire (3), où le levier (27) fonctionne sur le corps principal (2) pour déplacer axialement le corps principal (2) par rapport au corps tubulaire (3), l'activation du levier (27) déterminant en outre un coulissement axial de la mâchoire (16) par rapport au corps tubulaire (3) et le passage de la mâchoire (16) depuis la première position déverrouillée vers la seconde position verrouillée ;
**caractérisé en ce que** la position axiale du point d'appui (28) du levier (27) sur le corps tubulaire (3) est ajustable.

2. Raccord rapide selon la revendication 1, le corps tubulaire (3) comprenant un régulateur (26) auquel ledit levier (27) est engagé, le point d'appui (28) du levier (27) étant axialement déplaçable par le mouvement du régulateur (26).

3. Raccord rapide selon la revendication précédente, comprenant un élément de blocage (34) configuré pour bloquer le mouvement du régulateur (26).

4. Raccord rapide selon la revendication 2 ou 3, le levier (27) étant mobile par rapport au régulateur (26) entre au moins un premier état déverrouillé, correspondant à la première position déverrouillée de la mâchoire (16), et un second état verrouillé, correspondant à la seconde position verrouillée de la mâchoire (16).

5. Raccord rapide selon l'une quelconque des revendications précédentes, la mâchoire (16) étant engagée au corps tubulaire (3) au niveau d'une surface inclinée (25) du corps tubulaire (3), l'activation du levier (27) déterminant le coulissement axial de la mâchoire (16) le long de ladite surface inclinée (25), la compression radiale de la mâchoire (16) et le passage consécutif de la mâchoire (16) à partir de la première position déverrouillée vers la seconde position verrouillée.

6. Raccord rapide selon l'une quelconque des revendications précédentes, comprenant au moins un joint principal (14) axialement disposé entre le corps principal (2) et la mâchoire (16), le levier (27) étant configuré afin de déterminer la compression dudit au moins un joint principal (14) contre une surface externe de l'embout (4).

7. Raccord rapide selon la revendication précédente, comprenant une pluralité de joints principaux (15) disposés axialement entre le corps principal (2) et la mâchoire (16).

8. Raccord rapide selon la revendication 6 ou 7, ledit au moins un joint principal (14) provenant d'un élément annulaire (15).

9. Raccord rapide selon l'une quelconque des revendications précédentes, le levier (27) étant prévu avec une partie de fonctionnement (31) configurée pour agir sur le corps principal (2) pour déterminer le passage de la mâchoire (16) depuis la première position déverrouillée vers la seconde position verrouillée et vice versa.

10. Raccord rapide selon la revendication précédente, ladite partie de fonctionnement (31) ayant une surface arquée (33) se développant continuellement par rapport à une surface de butée (32) du levier (27).

11. Raccord rapide selon la revendication précédente, lors du passage du levier (27) depuis un premier état déverrouillé, correspondant à la première position déverrouillée de la mâchoire (16), vers un second état verrouillé, correspondant à la seconde position verrouillée de la mâchoire (16), la surface arquée (33) exerçant une poussée sur le corps principal (2) qui est supérieure à une poussée exercée par la surface de butée (32).

12. Procédé de régulation d'un raccord rapide réalisé selon l'une ou plusieurs des revendications précédentes, comprenant :
- le déplacement axialement du point d'appui (28) du levier (27) par rapport à une première partie (26) du corps tubulaire (3) ;
- le blocage axialement du point d'appui (28) du levier (27) par rapport à la première partie du corps tubulaire (3).

13. Procédé selon la revendication précédente, le déplacement axialement du point d'appui (28) du levier (27) par rapport à la première partie du corps tubulaire (3) comprenant le déplacement axialement d'un régulateur (26) par rapport à la première partie du corps tubulaire (3).

14. Procédé selon la revendication 12 ou 13, le blocage axialement du point d'appui (28) du levier (27) par rapport à la première partie du corps tubulaire (3) comprenant la régulation de la position d'un élément de blocage (34) par rapport au régulateur (26).
